# EUROPEAN PATENT SPECIFICATION

(11) **EP 3 515 804 B1**
(45) Date of publication and mention of the grant of the patent: **06.03.2024**
(21) Application number: 17853518.3
(22) Date of filing: 21.09.2017
(51) Int. Cl.: B63B 59/08, A01K 61/60, A01K 75/00, A46B 15/00, E04H 4/16

(54) **DEVICE FOR CLEANING A SURFACE OF A STRUCTURE, THE SURFACE BEING SUBMERGED IN A WATER COLUMN**
VORRICHTUNG ZUR REINIGUNG DER OBERFLÄCHE EINER STRUKTUR, WOBEI DIE OBERFLÄCHE IN EINE WASSERSÄULE EINGETAUCHT IST
DISPOSITIF DE NETTOYAGE D'UNE SURFACE D'UNE STRUCTURE, LA SURFACE ÉTANT IMMERGÉE DANS UNE COLONNE D'EAU

(30) Priority: 23.09.2016 NO 20161527
(43) Date of publication of application: 31.07.2019
(73) Proprietor: Aqua Robotics AS, 4344 Bryne (NO)
(72) Inventor: MOLAUG, Ole, 4345 Bryne (NO); MOLAUG, Anders, 4347 Lye (NO); AAMODT, Harald, 4352 Kleppe (NO)
(74) Representative: Håmsø Patentbyrå AS
(86) International application number: PCT/NO2017/050240
(87) International publication number: WO 2018/056835

(56) References cited:
- WO-A1-98/58535
- WO-A1-03/048484
- WO-A1-2009/110802
- WO-A2-2013/126359
- GB-A- 584 029
- GB-A- 2 038 721
- US-A- 3 003 168
- US-A- 4 776 053
- US-A- 4 783 868
- US-A- 4 909 173
- US-A- 5 864 917
- US-B1- 7 506 393

## Description

### Technical field

The present solution relates to a device for cleaning a surface of a structure, the surface being submerged in a water column.

### Background

Nowadays, an approach for fish-farming involves raising fish inside a structure such as a net pen or a cage, which normally is a structure totally enclosed on all, or all but the top, sides that keeps the fish trapped inside. Also, some of these structures might have parts which are not submerged, for example an open cage normally has an upper part which stays out of the water for providing a floating path for the worker personnel to walk on.

The water flows freely through the structure which allows the water inside being replaced by flow-through. This, in turn, allows the oxygen content of the water inside to be satisfactory for the fish being raised therein. Overtime, the enclosing surfaces, for example a seine, will become covered with fouling and the water flow-through decreases. This has undesirable consequences to the water inside, for the purposes of fish-farming, such as a decrease in the oxygen content inside the structure, which is undesirable for the well-being, health and growth of the fish.

A known approach for cleaning a submerged surface involves deploying a device in the water, for performing the cleaning operation without the need to surface the submerged surface. In practice, in order for the device to perform the cleaning operation properly, there is a need to move it onto and maintain contact with the surface being cleaned. It is known that it can be difficult to prevent the device to deviate from the surface when it moves in the water, or to achieve a sufficient contact in order to perform the cleaning operation efficiently.

Known solutions propose the use of active means incorporated in the device, such as for example a propeller based means, for generating a waterjet that results in a force that pushes the device against the surface being cleaned. This solution is known to be the normal choice of the skilled person in the art when moving a submerged object. However, this type of solution does not efficiently overcome the problem of keeping the device in contact with the submerged structure, having many drawbacks. One of the disadvantages of the necessary additional components for pushing the device against the surface is the added complexity. A further disadvantage is the added cost. Another negative aspect observed in practice, is the need for a power source to supply energy to those active means. In most cases, this is quite a challenge since the intended structure to be cleaned is in a location which requires the power to be supplied from a vessel by means of, for example, a power cable, a vacuum hose or a hydraulic hose. Furthermore, the use of active means can be too disruptive to the nearby fauna and, in some circumstances, can be dangerous up to the point of harming the animals nearby. For example, in case the device is used from within a structure where some animals, such as a fish, are trapped, there is a possibility of harming those animals due to the active nature of the means, such as rotating propellers.

Document WO 2009110802 A1 discloses cleaning device for a surface of an underwater structure. The cleaning device includes a support structure, at least one cleaning roller which is rotatable about its longitudinal axis, and at least one rotary device connected to the cleaning roller. The cleaning device includes fixed flow diverters for directional diversion of at least a part of emanating water currents directed toward the surface of the underwater structure. The fixed directional diversion will produce a reaction force in the direction of the surface of the underwater structure.

Document WO 9858535 A1 discloses a device for the cleaning of breeding nets without lifting the net from the sea. The device includes an inner carriage on one side of the breeding net and another carriage on the other side of the net, each of the carriages being equipped with magnets on their upper and lower edges. On the surface of the inner carriage and of the outer carriage which faces the breeding net there are rollers and rotatable brushes in contact with the breeding net. This allows an upward and downward displacement of the cleaning device on the breathing net. The rotating brushes are mounted to mesh together so that a brushing motion is produced when the cleaning device is in motion relative to the breeding net. Specifically, the rollers and the brushes will crush and loosen up the growth fouling the net.

When cleaning underwater surfaces such as the side of swimming pools or a submerged hull of a boat, know solutions include pivotable fins for urging cleaning components such as fixed brushes towards the surface being cleaned. Examples of such solutions are disclosed in GB 584029 A, US 4909173 A1, US 4783868 A1, US 5864917 A1, WO 03/048484 A1 and US 3003168 A1.

### General description

Disclosed is a device for cleaning a surface of a barrier for fish farming, the surface being submerged in a water column, comprising:
- at least one fin for steering the device against the submerged surface while the device moves, through the water column, in a direction parallel to the submerged surface;
- at least one pivoting means for pivoting the at least one fin, in relation to the device, in reaction to a drag acting on the at least one fin; and
- at least one brush for cleaning the submerged surface,
wherein the pivoting of the at least one fin is constrained for steering the device against the submerged surface, and the at least one brush comprises a pivot for allowing the rotation of the at least one brush in reaction to a contact of the at least one brush with the submerged surface.

The components of the device can work together in a passive manner in order to steer the device onto, and maintain contact with, the submerged surface, while moving in a direction parallel to the submerged surface. Furthermore, the features of the device for steering it against the submerged surface can be simple to implement and in a reduced number. Also, those features can be implemented without a power source.

The at least one fin and the at least one pivoting means can achieve orientations of the at least one fin which have both a direction of attack of a fin with a component parallel to the direction of the device and an exit direction of the fin with a component perpendicular to the submerged surface.

Also, the features of the present solution for steering the device against the submerged surface can be safe when used near animals, without harming them.

In one embodiment, the device comprises at least one obstructing means for obstructing the pivoting of the at least one fin.

The obstruction of the pivoting of the at least one fin may constrain the pivoting, for steering the device against the submerged surface. The obstructing means can be a simple and cheap solution for constraining the pivoting of the at least one fin.

In another embodiment, the at least one obstructing means is fixed to the device.

For example, an obstructing means fixed to the device, such as a stopper or a fixed knob, can obstruct a fin from pivoting more than a certain angle which, in turn, can orient the fin to steer the device against the submerged surface.

Alternatively, the at least one obstructing means can be fixed somewhere else for constraining the pivoting of the at least one fin, for example to the pivoting means.

In a further embodiment, the device comprises at least one flexible elongate member connecting the at least one fin to the device, for constraining the pivoting of the at least one fin.

The connection of the at least one fin to the device with a flexible elongate member may constrain the pivoting, for steering the device against the submerged surface.

The flexible elongate member, for example a wire, may be a simple solution for constraining the pivoting of the at least one fin.

The use of at least one flexible elongate member for constraining the pivoting of the at least one fin, may allow to concentrate the forces resulting from constraining the pivoting of the at least one fin solely in the flexible elongate member. This may avoid the possibility of mechanically harming the at least one fin due to the changes in the movement of the device.

In one embodiment, the at least one flexible elongate member is elastic.

An embodiment where the flexible elongate member is elastic can provide a damping effect when a fin approximates the limits of the pivoting of the at least one fin. It can also provide an improved adaptation of the at least one fin to changes and variations in the movement of the device.

In another embodiment, the pivoting means comprises a flexure bearing for pivoting the at least one fin, in relation to the device, in reaction to the drag acting on the at least one fin. This embodiment can be combined with any of the previous embodiments described.

A pivoting means can be implemented with a flexure bearing which pivots a fin in relation to the device. It can be very simple to implement without requiring further components. It can also be a cheap solution for pivoting a fin in relation to the device.

In a further embodiment, the flexure bearing is elastic and is for constraining the pivoting of the at least one fin.

An elastic flexure bearing can provide a simple adaptation of the pivoting means to constrain the pivoting of the at least one fin. The flexure bearing can be configured with an elasticity possibly depending on an expected drag to actuate on the fin.

Alternatively, the pivoting means can be implement with something else then an elastic flexure bearing, for example a spring.

In one embodiment, the pivoting means comprises a pivot for pivoting the at least one fin, in relation to the device, in reaction to a drag acting on the at least one fin.

A pivoting means can be implemented with a pivot which pivots a fin in relation to the device. A pivot can be, for example, a rotatable connection point between a fin and the device, or a shaft on which the fin pivots. It can be a simple solution for pivoting a fin in relation to the device.

In another embodiment, the at least one fin comprises at least two spokes for connecting the at least one fin with the at least one pivoting means. This embodiment can be combined with any of the previous embodiments described.

An embodiment in which the at least one fin comprises at least two spokes for connecting the at least one fin to the at least one pivoting means, can provide the steering of the device against the submerged surface based on a pulling force applied to the device, instead of a pushing force. Such a possibility might allow achieving quicker and smaller rotations of the at least one fin in reaction to changes in the direction of movement of the device. Alternatively, the fin can have a curved shape, which might allow achieving a rotation with a low rotational drag.

In a further embodiment, the device comprises at least one force exerting means for exerting a force on the device.

An embodiment of the device comprising a force exerting means can allow to control the movement of the device.

Alternatively, the device can move through the water column without a force exerting means, for example by moving solely due to its weight. In such an example, if the device is dropped from the surface, it will move downwards until it reaches an obstacle such as the seabed. In this case, the effects of the present solution may be observed during the descent.

In one embodiment, the at least one force exerting means is a cable for hoisting the device through the water column.

The force exerting means can be implemented as a cable for hoisting the device. Such a possibility can be a simple solution when the submerged surface is in a mostly vertical position, for example a seine enclosing an open cage for fish farming, and may use the weight of the device to control the movement of the device by balancing between the tension applied by the cable and the weight of the device. In such an embodiment, the weight of the device can be configured depending on the intended force or speed for the device to move downwards in the water column.

Alternatively, other force exerting means besides the at least one cable can be implemented. For example, a telescopic rod or a solution based on active means such as an underwater robotic arm, a propeller based propulsion means or an elevator means next to the submerged surface.

The presence of a brush in the device might allow to achieve an effective passive means for cleaning the surface. In such a solution, the brush could be facing the submerged surface and, together with the movement of the device in a parallel direction to and the steering against it, an engagement of the brush against the submerged surface can be achieved.

Alternatively, the device may comprise something else for cleaning the submerged surface, such as any active means for cleaning a submerged surface, for example a vacuum means or a water jet means.

The at least one brush comprising a pivot, can be an efficient solution for cleaning a submerged surface of a structure. For example, when the brush comprising a pivot engages the submerged surface, it might rotate due to said engagement occurring while the device moves parallel to the submerged surface. In that example, if the surface being cleaned is a seine, the engagement of the brush with the seine might result in some of the bristles of the brush to go through the seine holes and contacting the opposite side of the seine. This possibility, together with the rotation of the brush, might allow to clean, not only the side of the seine facing the device but also, the opposite side, which could achieve a very efficient use of the device.

Disclosed is also a system for cleaning a structure comprising at least one submerged surface in a water column, comprising the device described above. In one embodiment, the structure is a barrier for fish farming.

The solution can be used for any aquatic operation on a structure which requires a device to move parallel to a surface of said structure and be kept in contact with the surface. For example, the device might perform a cleaning operation on a seine with fouling or in any other kind of aquatic structure such as, for example, a wall of a closed fish pen.

### Brief description of the drawings

So that the invention may be more readily understood, and so that further features thereof may be appreciated, embodiments of the invention will now be described by way of example with reference to the accompanying drawings.
Figure 1 shows a schematic illustration of a first embodiment of the device, in a perspective view.
Figures 2 and 3 show schematic illustrations of a side view of the embodiment of the device shown in figure 1, when this is being hoisted and lowered, respectively. The two figures show how the two fins in the device pivot between two corresponding obstructing means fixed to the device.
Figures 4 and 5 show schematic illustrations of a side view of a second embodiment of the device, also when being hoisted and lowered, respectively, and how one fin pivots between the two obstructing means fixed to the device. When compared to the previous embodiment shown in figures 1 to 3, the obstructing means obstruct the pivoting of the fin in an inverted manner. As it will be explained below, this behaviour occurs due to the positioning of the obstructing means in relation to the pivot.
Figures 6 and 7 show schematic illustrations of a side view of a third embodiment of the device, also when this is being hoisted and lowered, respectively, and how one fin pivots within a single obstructing means fixed to the device.
Figures 8 and 9 show schematic illustrations of a side view of a fourth embodiment of the device, also when this is being hoisted and lowered, respectively, and how a fin with a curved shape pivots between two obstructing means fixed to the device, the fin being connected to the pivot with two spokes.
Figures 10 and 11 show schematic illustrations of a side view of a fifth embodiment of the device, also when this is being hoisted and lowered, respectively, and how one fin pivots with two flexible elongated members fixed to the fin and to the device.
Figures 12 and 13 show schematic illustrations of a side view of sixth embodiment of the device, also when this is being hoisted and lowered, respectively, and how one fin pivots in relation to the device, with an elastic flexure bearing.

### Description of embodiments

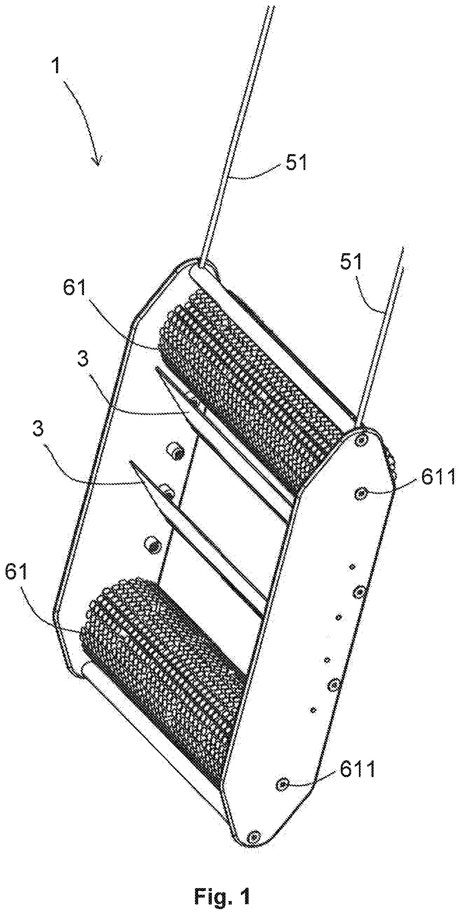

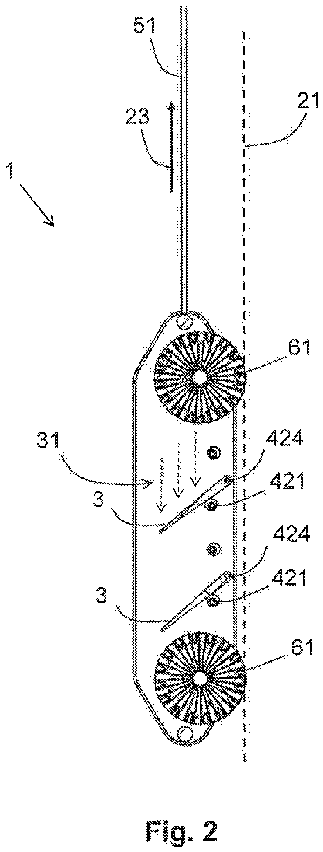

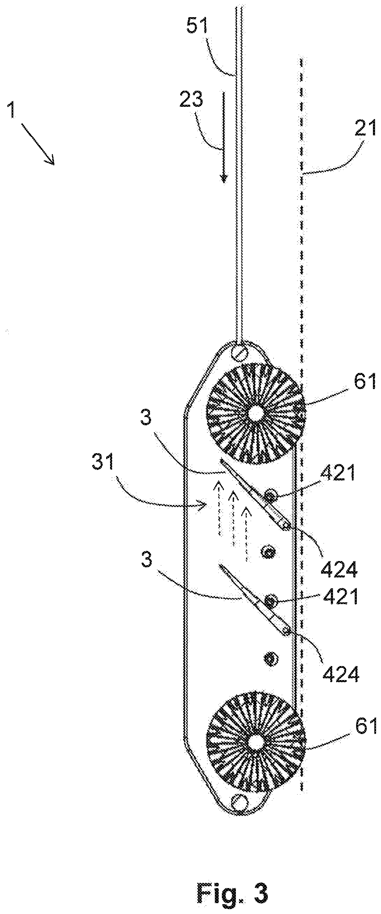

An embodiment of the present solution is achieved with a device 1 for performing a cleaning operation to a submerged seine used as an enclosure of an open cage for fish farming. This device 1 is illustrated from a general perspective in figure 1 and in a more detailed manner in figures 2 and 3.

Some components of the embodiment can be observed in figure 1. Here, a device 1 is illustrated having two cables 51 for exerting force in the device 1. The device 1 also has two fins 3 for steering the device 1 against the seine while the device 1 moves in a direction parallel to the seine. Also shown, are two brushes 61 for cleaning the submerged seine, which embodies the submerged surface 21 of the present solution. The two brushes 61 are connected to the device 1 by a pivoting shaft, which embodies a pivot 611 of a brush 61 of the present solution, for allowing the rotation of the two brushes 61 in reaction to an engagement with the submerged surface 21.

Moreover, a frame is also illustrated, which embodies the body of the device 1 and keeps all the inner components of this embodiment in place. The body of the device 1 can have many other shapes or structures. In this embodiment, one end of each cable 51 is fastened to the frame. The fins 3 and the brushes 61, pivot in a respective pivot shaft which has its two ends also fastened to the frame, thus bearing the respective rotating motions from there. With regard to this aspect, some components fastened to the frame can be seen on one of its sides, for example the pivots 611 of the two brushes 61.

A cleaning operation can start by moving the device 1 with the two cables 51. Due to that movement, a force will act opposite to the relative motion of the device 1 moving with respect to the surrounding water. This force, known as drag, will act on the fins 3 which will, in turn, pivot in relation to the device 1. The pivoting of the fins 3 is adapted to steer the device 1 against the submerged surface 21. The subsequent physical contact of the device 1 with the submerged surface 21, engages the brushes 61 with the submerged surface 21. The engagement of the brushes 61 with the submerged surface 21 results in the brushes 61 cleaning the submerged surface 21 and, at same time, the brushes pivoting around its pivots 611.

The steering of the device 1 against the submerged surface 21 by the two fins 3 is observed with more detail in figures 2 and 3. These show a side view of the embodiment of the device 1 shown in figure 1, when this is being hoisted, in figure 2, and lowered, in figure 3. The device is shown having two pivots 424 for pivoting the two fins 3, and two obstructing means 421 fixed to the device 1, for obstructing the pivoting of the two fins 3.

In figure 2 the device 1 is being hoisted through a water column, by a tension being exerted in the device 1 through the two cables 51, of which only a side of one cable 51 is shown. Such a tension results in the device 1 performing a movement in a direction 23 parallel to the submerged surface 21. This movement results in a drag 31 acting in the two fins 3. Although the figures only show one set of symbolic dashed arrows for symbolizing the actuation of the drag 31, it should be appreciated that this force acts on all fins 3. In reaction to this drag 31, the two fins 3 have pivoted freely around the two pivots 424, in an anti-clockwise motion in the figure 2, until they were obstructed by the obstructing means 421. At this orientation, the two fins 3 are pivoted in a manner that steers the device 1 against the submerged surface 21.

In figure 3 the device 1 is being lowered through the water column, as a result of its weight. The drag 31 now acts in an inverted direction in comparison to figure 2, which has pivoted the two fins 3 around the pivots 424, in a clockwise motion in the figure 3, until they were obstructed by the other obstructing means 421. At this new orientation, the two fins 3 are pivoted in a manner that also steers the device 1 against the submerged surface 21, even though the direction 23 has been inverted.

In this embodiment it is observed that the two pivots 424 and the two obstructing means 421 allow changes in the direction of the device 1, and subsequently in the drag 31 actuated on the two fins 3, without active resistance. Therefore, the components of the device 1 work together in a passive manner in order to steer the device 1 onto, and maintain contact with, the submerged surface 21, while moving in a direction 23 parallel to the submerged surface 21.

Also, in this embodiment the only features of the device 1 required for steering it against the submerged surface 21 are the two fins 3, the pivots 424, and the obstructing means 421. As such, these are simple to implement and in a reduced number. Furthermore, these features of the embodiment are implemented without a power source.

Since the two fins 3 of this embodiment are for steering the device 1 against the submerged surface 21, they are provided in the device 1 to achieve orientations with an exit direction with a component perpendicular to the submerged surface 21. Also, since the two pivots 424 are for pivoting the two fins 3 in reaction to a drag 31 acting thereon, the two fins 3 are also provided in the device 1 to achieve orientations with a direction of attack with a component parallel to the direction 23 of the device 1.

Also, since the only moving parts of the embodiment are the two fins 3 that move in a passive manner in reaction to the drag 31, the features of the present embodiment for steering the device 1 against the submerged surface 21 are safe when used near animals, without harming them.

Moreover, the movement of the device 1 is controlled by the two cables 51. The balance between the tension applied by the cables 51 and the weight of the device 1 allows to achieve said control. The two cables 51 are a simple means for exerting a force in the device 1, requiring only a mechanical connection to the device 1 for acting on it with a tension force. Alternatively, other force exerting means could be used, for example only one cable 51 or more than two cables 51.

Since the device 1 is steered against the submerged surface 21 and the two brushes 61 are placed in the device 1 facing it, the mere movement due to the device 1 moving in a direction 23 parallel to the submerged surface 21 is sufficient for the two brushes 61 to clean the submerged surface 21. As such, the two brushes 61 are an effective passive means for cleaning the submerged surface 21.

The pivots 611 of the two brushes 61 allow to clean both sides of a surface like a seine. The engagement of the two brushes 61 with the seine while rotating, results in some of the bristles of the two brushes 61 to go through the seine holes and contacting the opposite side of the seine. This occurrence makes it possible to clean both sides of the submerged surface 21, making it an efficient solution. Furthermore, the peripheral speed of the brush 61 is equivalent to the ascending or descending speed of the device 1.

Also, the two obstructing means 421 obstruct the pivoting of the two fins 3, which is a form of constraining the pivoting of the two fins 3. Thus, providing at least one obstructing means 421 for each fin 3 is simple and easy solution for constraining the pivoting of the two fins 3. The two obstructing means 421 are fixed to the device 1, in line with the pivoting motion of the two fins 3, which is a simple solution.

The implementation of the pivoting means with the two pivots 424 in the embodiment, is a simple way for pivoting the two fins 3 in relation to the device 1, requiring only a pivot connecting the device 1 and a fin 3.

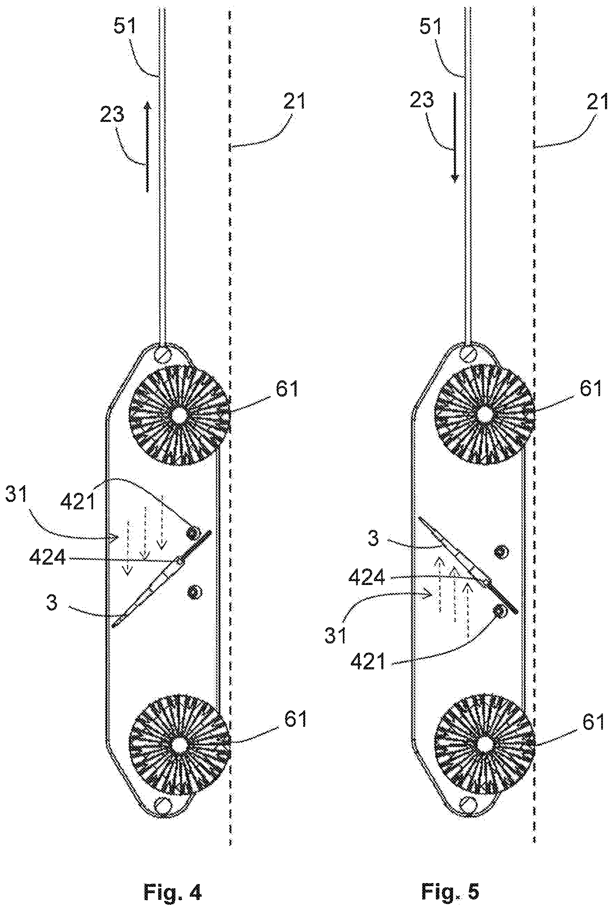

Another embodiment of the present solution is achieved by changing the previous embodiment to have a different position of the fin 3 in relation to the pivot 424 for pivoting the fin 3 in relation to the device 1. In such an alternative, the pivot 424 is not at an end of the fin 3. Also, there is only one fin 3. Furthermore, although the obstructing means are the same, these are in a different position in the device 1 in relation to the pivot 424 for pivoting the fin 3. The device 1 of this alternative is illustrated in figures 4 and 5.

In figure 4 the device 1 is also being hoisted through a water column, by a tension being exerted in the device 1 through the two cables 51, similar to figure 2. However, in reaction to the drag 31, the fin 3 has pivoted freely around the pivot 424, in an anti-clockwise motion in the figure 4, until one end of the fin 3 was obstructed by the obstructing means 421. In figure 5 the device is being lowered through the water column, as a result of its weight, similar to figure 3. In this case, the fin 3 is also obstructed in one end by the obstructing means 421.

In comparison to the previous embodiment illustrated in figures 1, 2, and 3, since the pivot 424 is not in one end of the fin 3, the two obstructing means 421 now operate in an inverted manner, i.e. the obstructing means 421 which appears above the fin in the figure, now obstructs the pivoting motion when the fin 3 pivots in an anti-clockwise motion in the figure.

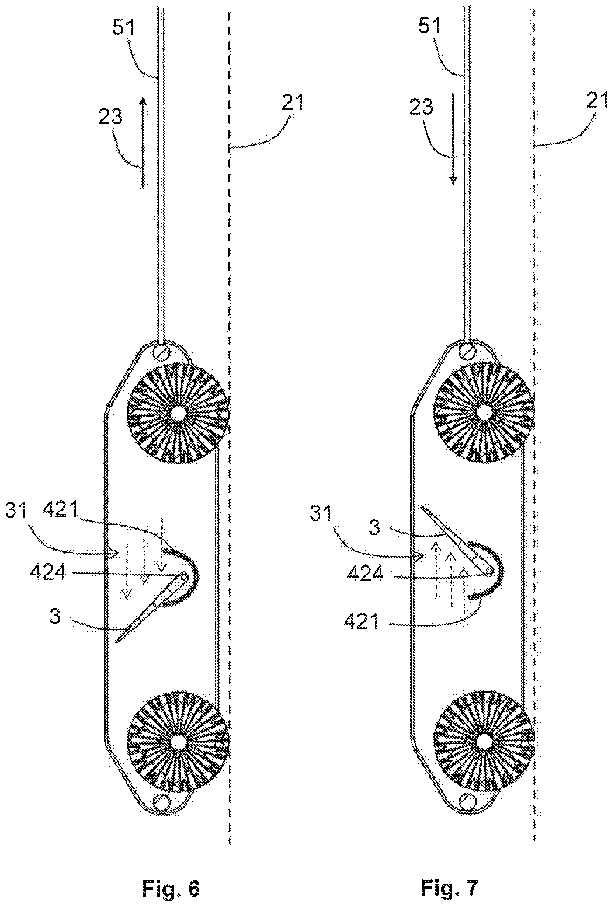

A further embodiment of the present solution is achieved by changing the first embodiment to include a different obstructing means 421. In such an alternative, the obstructing means 421 is a single component fixed to the device 1 that obstructs the pivoting of the fin 3 in two orientations. Also, there is only one fin 3. The device 1 of this alternative is illustrated in figures 6 and 7.

In figure 6 the device 1 is also being hoisted through a water column, by a tension being exerted on the device 1 through the two cables 51, similar to figure 2. However, in reaction to the drag 31, the fin 3 pivots freely around the pivot 424, in an anti-clockwise motion in the figure 6, until it is obstructed by the obstructing means 421. In figure 7 the device 1 is being lowered through the water column, as a result of its weight, similar to figure 3. In this case, the fin 3 is also obstructed but, however, in this embodiment is obstructed by the same obstructing means 421.

In comparison to the previous device 1 illustrated in figures 1, 2 and 3, the present embodiment requires half the number of obstructing means 421 in order to achieve the same constraint of the pivoting of the fin 3.

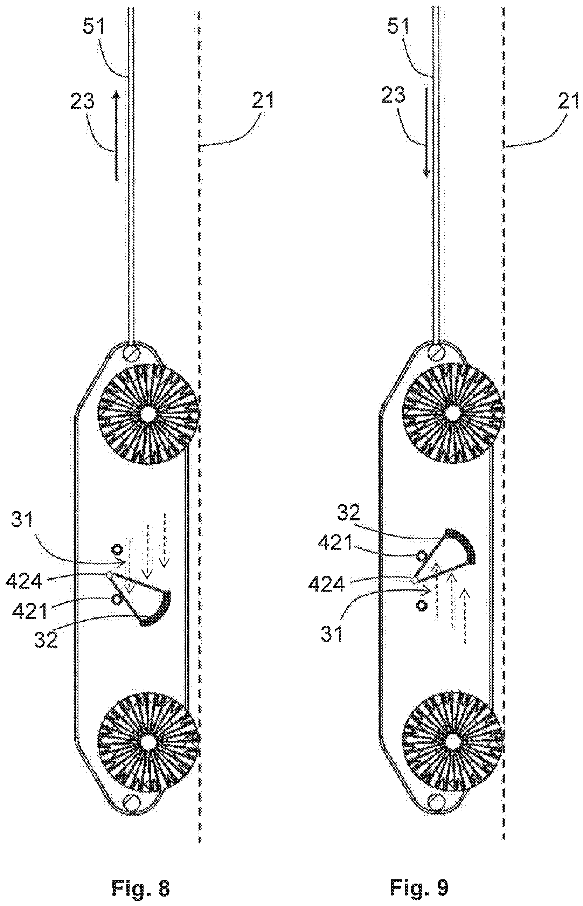

An embodiment of the present solution is achieved by changing the first embodiment to include a fin 32 connected to the pivot 424 by two spokes. Also, the fin 32 has a curved shape with the concave side facing the pivot 424. The obstructing means 421 obstruct the pivoting of the fin 32 by obstructing the spokes. Furthermore, such an embodiment is herein illustrated with only one fin 32, but several more instances may also be present, without departing from the technical concept behind the present solution. The device 1 of this alternative is illustrated in figures 8 and 9.

In figure 8 the device 1 is also being hoisted through a water column, by a tension being exerted in the device 1 through the two cables 51, similar to figure 2. However, in reaction to the drag 31, the fin 32 pivots freely around the pivot 424, in a clockwise motion in the figure 8, until one of the spokes is obstructed by the obstructing means 421. In figure 9 the device 1 is being lowered through the water column, as a result of its weight, similar to figure 3. In this embodiment, the other spoke is obstructed.

Since the fin 32 is connected to the pivoting means 424 by the two spokes, the fin 32 provides the steering of the device 1 against the submerged surface 21 based on a pulling force applied to the device 1. Also, the rotation of the fin 32 in reaction to changes in the direction 23 of the movement of the device 1 is quick and small. Furthermore, the curved shape of the fin 32 achieves a rotation with a low drag 31.

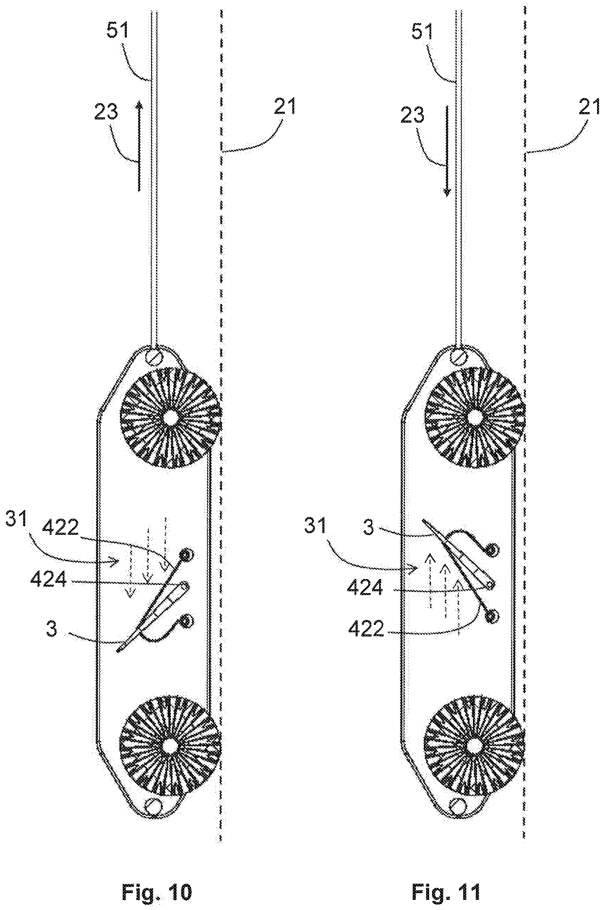

Another embodiment of the present solution is achieved by replacing the obstructing means 421 of the first embodiment with a flexible elongate member 422 for connecting a fin 3 with the device 1. The device 1 of this alternative is illustrated in figures 10 and 11.

In figure 10 the device 1 is also being hoisted through a water column, by a tension being exerted on the device 1 through the two cables 51, similar to figure 2. However, in reaction to the drag 31, the fin 3 pivots freely around the pivot 424, in an anti-clockwise motion in the figure 10, until one of the flexible elongate members 422 is stretched to its maximum. In figure 11 the device 1 is being lowered through the water column, as a result of its weight, similar to figure 3. In this case, the other flexible elongate member 422 is stretched to its maximum.

The two flexible elongate members 422 constrain the pivoting of the fin 3, and with that feature the device 1 is steered against the submerged surface 21. In order to implement the two flexible elongate members 422, wires can, for example, be used, making it a simple solution for constraining the pivoting of the fin 3.

When the flexible elongate members 422 are stretched to a maximum, the tension is concentrated in them. In comparison to the first embodiment, illustrated in figures 1, 2, and 3, the flexible elongate members 422 avoid mechanically harming the fin 3 due to changes in the movement of the device 1.

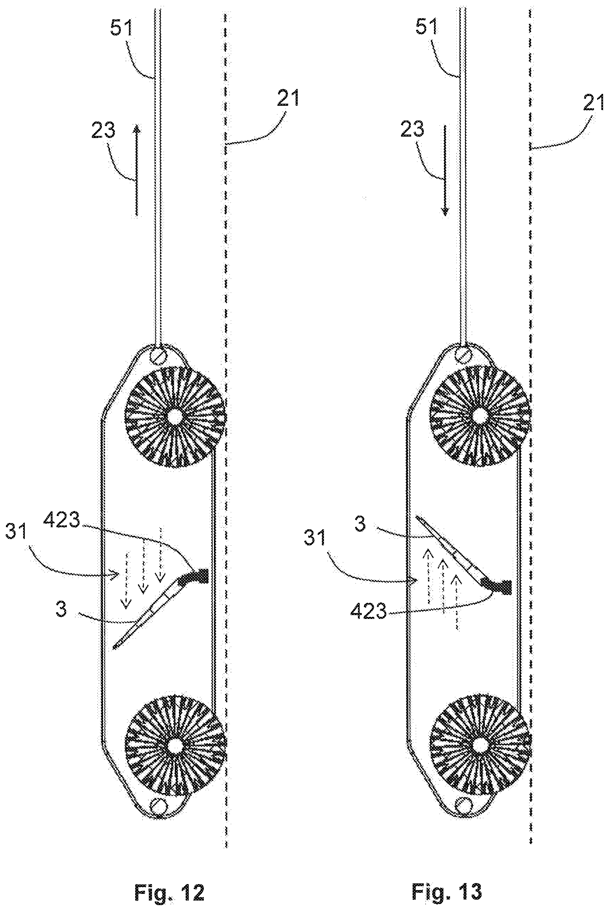

A further embodiment of the present solution is achieved by changing the first embodiment to include a flexure bearing 423 instead of a pivot 424. Also, the device 1 only has one fin 3. The flexure bearing 423 is elastic. The device 1 of that changed embodiment is illustrated in figures 12 and 13.

In a similar manner to the previous pairs of figures 2 to 11, figure 12 illustrates the device 1 being hoisted due to a tension being applied through the two cables 51 and figure 13 illustrates the device 1 being lowered due to its weight. In this embodiment, the fin 3 also pivots in relation to the device 1 due the drag 31 acting on the fin 3 and due to the flexure bearing 423 allowing for such a free pivoting. However, this flexure bearing 423 is elastic. Specifically, the elasticity of the flexure bearing 423 has been chosen according to an expected drag to be actuated on the fin 3, in order to provide for a constrain to the pivoting of the fin 3. In figures 12 and 13 the fin 3 is shown with orientations in which the resulting force from the elastic force of the flexure bearing 423 and the drag 31, is null.

This changed embodiment only requires the flexure bearing 423 for pivoting the fin 3 in relation to the device 1 and constrain said pivoting for steering the device 1 against the submerged surface 21. This makes it simple to implement this embodiment. This flexure bearing 423 is a piece of elastic material connecting the fin 3 to the device 1 and its elasticity can be changed by changing its width. Thus, this is a simple component of the solution.

Although the embodiments above disclose variations of a device 1 for performing a cleaning operation to a submerged seine used as an enclosure of an open cage for fish farming, it is appreciated that the solution is suitable for any other aquatic operation on a structure which requires a device to move parallel to a surface of said structure and be kept in contact with the surface.

It should be noted that the above-mentioned embodiments illustrate, rather than limit, the invention, and that those skilled in the art will be able to design many alternative embodiments without departing from the scope of the appended claims. For example, other combinations may be easily contemplated by a skilled person in the art, such as providing a device with a flexure bearing for pivoting a fin, in which, in order to constrain the pivoting of the fin, it includes both elasticity in the flexure bearing and an obstructing means fixed the device. Also, in the claims, any reference signs placed between parentheses shall not be construed as limiting the claim. Use of the verb "comprise" and its conjugations does not exclude the presence of elements or steps other than those stated. The article "a" or "an" preceding an element does not exclude the presence of a plurality of such elements.

## Claims

1. A device (1) for cleaning a surface (21) of a barrier for fish farming, the surface (21) being submerged in a water column, comprising:
- at least one fin (3) for steering the device (1) against the submerged surface (21) while the device (1) moves, through the water column, in a direction (23) parallel to the submerged surface (21) ;
- at least one pivoting means for pivoting the at least one fin (3), in relation to the device (1), in reaction to a drag (31) acting on the at least one fin (3); and
- at least one brush (61) for cleaning the submerged surface (21),
wherein the pivoting of the at least one fin (3) is constrained for steering the device (1) against the submerged surface (21), and
**characterised in that** the at least one brush (61) comprises a pivot (611) for allowing the rotation of the at least one brush (61) in reaction to a contact of the at least one brush (61) with the submerged surface (21).

2. Device (1) according to claim 1, comprising at least one obstructing means (421) for obstructing the pivoting of the at least one fin (3).

3. Device (1) according to claim 2, wherein the at least one obstructing means (421) is fixed to the device (1).

4. Device (1) according to claim 1, comprising at least one flexible elongate member (422) connecting the at least one fin (3) to the device (1), for constraining the pivoting of the at least one fin (3).

5. Device (1) according to claim 4, wherein the at least one flexible elongate member (422) is elastic.

6. Device (1) according to any of the previous claims, wherein the pivoting means comprises a flexure bearing (423) for pivoting the at least one fin (3), in relation to the device (1), in reaction to the drag (31) acting on the at least one fin (3).

7. Device (1) according to claim 6, wherein the flexure bearing (423) is elastic and is for constraining the pivoting of the at least one fin (3).

8. Device (1) according to any of the claims 1 to 5, wherein the pivoting means comprises a pivot (424) for pivoting the at least one fin (3), in relation to the device (1), in reaction to the drag (31) acting on the at least one fin (3).

9. Device (1) according to any of the previous claims, wherein the at least one fin (3) comprises at least two spokes for connecting the at least one fin (3) with the at least one pivoting means.

10. Device (1) according to any of the previous claims, comprising at least one force exerting means for exerting a force on the device (1).

11. Device (1) according to claim 10, wherein the at least one force exerting means is a cable (51) for hoisting the device (1) through the water column.

12. A system for cleaning a structure comprising at least one submerged surface (21) in a water column, comprising the device (1) described in any of the previous claims.

13. System according to claim 12, wherein the structure is a barrier for fish farming.

## Patentansprüche

1. Eine Vorrichtung (1) zum Reinigen einer Oberfläche (21) einer Barriere für die Fischzucht, wobei die Oberfläche (21) in eine Wassersäule eingetaucht ist, umfassend:
- mindestens eine Flosse (3) zum Steuern der Vorrichtung (1) gegen die eingetauchte Oberfläche (21), während sich die Vorrichtung (1) durch die Wassersäule in einer Richtung (23) parallel zu der eingetauchten Oberfläche (21) bewegt;
- mindestens ein Schwenkmittel zum Schwenken der mindestens einen Flosse (3) in Bezug auf die Vorrichtung (1) in Reaktion auf einen auf die mindestens eine Flosse (3) wirkenden Widerstand (31); und
- mindestens eine Bürste (61) zum Reinigen der eingetauchten Oberfläche (21),
wobei das Schwenken der mindestens einen Flosse (3) zum Steuern der Vorrichtung (1) gegen die eingetauchte Oberfläche (21) beschränkt wird, und
**dadurch gekennzeichnet, dass** die mindestens eine Bürste (61) einen Drehpunkt (611) aufweist, der eine Drehung der mindestens einen Bürste (61) in Reaktion auf einen Kontakt der mindestens einen Bürste (61) mit der eingetauchten Oberfläche (21) ermöglicht.

2. Vorrichtung (1) nach Anspruch 1, umfassend mindestens eine Sperreinrichtung (421), um das Schwenken der mindestens einen Flosse (3) zu verhindern.

3. Vorrichtung (1) nach Anspruch 2, wobei die mindestens eine Sperreinrichtung (421) an der Vorrichtung (1) befestigt ist.

4. Vorrichtung (1) nach Anspruch 1, umfassend mindestens ein flexibles längliches Element (422), das die mindestens eine Flosse (3) mit der Vorrichtung (1) verbindet, um das Schwenken der mindestens einen Flosse (3) zu beschränken.

5. Vorrichtung (1) nach Anspruch 4, wobei das mindestens eine flexible längliche Element (422) elastisch ist.

6. Vorrichtung (1) nach einem der vorangehenden Ansprüche, wobei das Schwenkmittel ein Biegelager (423) zum Schwenken der mindestens einen Flosse (3) in Bezug auf die Vorrichtung (1) in Reaktion auf den auf die mindestens eine Flosse (3) wirkenden Widerstand (31) umfasst.

7. Vorrichtung (1) nach Anspruch 6, wobei das Biegelager (423) elastisch ist und zum Einschränken des Schwenkens der mindestens eine Flosse (3) dient.

8. Vorrichtung (1) nach einem der Ansprüche 1 bis 5, wobei das Schwenkmittel einen Drehpunkt (424) zum Schwenken der mindestens einen Flosse (3) in Bezug auf die Vorrichtung (1) in Reaktion auf den auf die mindestens eine Flosse (3) wirkenden Widerstand (31) umfasst.

9. Vorrichtung (1) nach einem der vorangehenden Ansprüche, wobei die mindestens eine Flosse (3) mindestens zwei Speichen zur Verbindung der mindestens einen Flosse (3) mit dem mindestens einen Schwenkmittel aufweist.

10. Vorrichtung (1) nach einem der vorangehenden Ansprüche, umfassend mindestens ein Mittel zur Ausübung einer Kraft auf die Vorrichtung (1).

11. Vorrichtung (1) nach Anspruch 10, wobei das mindestens eine Mittel zur Kraftausübung ein Seil (51) zum Ziehen der Vorrichtung (1) durch die Wassersäule ist.

12. Ein System zum Reinigen einer Struktur, umfassend mindestens eine eingetauchte Oberfläche (21) in einer Wassersäule, umfassend die in einem der vorangehenden Ansprüche beschriebenen Vorrichtung (1).

13. System nach Anspruch 12, wobei die Struktur eine Barriere für die Fischzucht ist.

## Revendications

1. Un dispositif (1) de nettoyage d'une surface (21) d'une barrière de pisciculture, la surface (21) étant immergée dans une colonne d'eau, comprenant :
- au moins un aileron (3) pour diriger le dispositif (1) contre la surface immergée (21) pendant que le dispositif (1) se déplace, à travers la colonne d'eau, dans une direction (23) parallèle à la surface immergée (21) ;
- au moins un moyen de pivotement pour pivoter le au moins un aileron (3), par rapport au dispositif (1), en réaction à une traînée (31) agissant sur le au moins un aileron (3) ; et
- au moins une brosse (61) pour nettoyer la surface immergée (21),
dans lequel le pivotement du au moins un aileron (3) est restreint pour diriger le dispositif (1) contre la surface immergée (21), et
**caractérisé en ce que** la au moins une brosse (61) comprend un pivot (611) pour permettre la rotation de la au moins une brosse (61) en réaction à un contact de la au moins une brosse (61) avec la surface immergée (21).

2. Dispositif (1) selon la revendication 1, comprenant au moins un moyen d'obstruction (421) pour obstruer le pivotement du au moins un aileron (3).

3. Dispositif (1) selon la revendication 2, dans lequel le au moins un moyen d'obstruction (421) est fixé au dispositif (1).

4. Dispositif (1) selon la revendication 1, comprenant au moins un membre allongé flexible (422) qui connecte le au moins un aileron (3) au dispositif (1), pour restreindre le pivotement du au moins un aileron (3).

5. Dispositif (1) selon la revendication 4, dans lequel le au moins un membre allongé flexible (422) est élastique.

6. Dispositif (1) selon l'une quelconque des revendications précédentes, dans lequel le moyen de pivotement comprend un support à flexion (423) pour pivoter le au moins un aileron (3), par rapport au dispositif (1), en réaction à la traînée (31) agissant sur le au moins un aileron (3).

7. Dispositif (1) selon la revendication 6, dans lequel le support à flexion (423) est élastique et sert à restreindre le pivotement du au moins un aileron (3).

8. Dispositif (1) selon l'une quelconque des revendications 1 à 5, dans lequel le moyen de pivotement comprend un pivot (424) pour pivoter le au moins un aileron (3), par rapport au dispositif (1), en réaction à la traînée (31) agissant sur le au moins un aileron (3).

9. Dispositif (1) selon l'une quelconque des revendications précédentes, dans lequel le au moins un aileron (3) comprend au moins deux rayons pour connecter le au moins un aileron (3) au au moins un moyen de pivotement.

10. Dispositif (1) selon l'une quelconque des revendications précédentes, comprenant au moins un moyen d'application de force pour appliquer une force sur le dispositif (1).

11. Dispositif (1) selon la revendication 10, dans lequel le au moins un moyen d'application de force est un câble (51) pour hisser le dispositif (1) à travers la colonne d'eau.

12. Un système de nettoyage d'une structure comprenant au moins une surface immergée (21) dans une colonne d'eau, comprenant le dispositif (1) décrit dans l'une quelconque des revendications précédentes.

13. Système selon la revendication 12, dans lequel la structure est une barrière de pisciculture.
